# EUROPÄISCHE PATENTSCHRIFT

(11) **EP 2 549 067 B1**
(45) Veröffentlichungstag und Bekanntmachung des Hinweises auf die Patenterteilung: **24.12.2014**
(21) Anmeldenummer: 12176575.4
(22) Anmeldetag: 16.07.2012
(51) Int. Cl.: F01L 3/02, B21K 1/22

(54) **Verfahren zum Herstellen eines Ventils**
Method for manufacturing a valve
Procédé destiné à la fabrication d'une soupape

(30) Priorität: 21.07.2011 DE 102011079520
(43) Veröffentlichungstag der Anmeldung: 23.01.2013
(73) Patentinhaber: MAHLE International GmbH, 70376 Stuttgart (DE)
(72) Erfinder: Müller, Alexander, 72218 Wildberg (DE); Dohme, Lars, 31515 Wunstorf (DE)
(74) Vertreter: BRP Renaud & Partner mbB Rechtsanwälte Patentanwälte Steuerberater

(56) Entgegenhaltungen:
- EP-A1- 2 327 804
- WO-A2-2004/079237

## Beschreibung

Die vorliegende Erfindung betrifft ein Verfahren zum Herstellen eines, einen Ventilschaft und einen Ventilkopf umfassenden Ventils einer Brennkraftmaschine. Die Erfindung betrifft außerdem ein nach einem derartigen Verfahren hergestelltes Ventil einer Brennkraftmaschine (siehe z.B. EP-A-2 327 804, auf dem der Oberbegriff der Ansprüche 1 und 7 basiert).

Bislang wurde aus Verschleißschutzgründen bei martenitischen Ventilen, insbesondere bei Einlassventilen, ein Ventilsitz induktiv gehärtet bzw. gepanzert ausgeführt. Dabei wurden die geschmiedeten bzw. warmfließgepressten Ventile bei ca. 650° C angelassen, um einem Ventilkopf und vor allem einem Ventilschaft des Ventils eine gewisse Zähigkeit zu verleihen. Durch dieses Anlassen fällt aber auch die Härte am Ventilsitz wieder ab, so dass dieser im Anschluss an das Anlassen nochmals gehärtet werden musste. Dem Vorteil des Anlassens, nämlich einer verbesserten Elastizität und damit einer geringeren Bruchgefährdung, standen somit die damit einhergehende Reduzierung der Härte am Ventilsitz und dadurch die reduzierte Verschleißbeständigkeit entgegen.

Die vorliegende Erfindung beschäftigt sich mit dem Problem, ein Verfahren zur Herstellung eines Ventils einer Brennkraftmaschine anzugeben, welches die bisher aus dem Stand der Technik bekannten Nachteile nicht mehr aufweist.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, ein an sich bekanntes Ventil einer Brennkraftmaschine zunächst zu schmieden, insbesondere mittels ein Stauchschmiedeverfahrens zu schmieden und anschließend bei einer Temperatur von maximal ca. 600°C, bevorzugt bei einer Temperatur von maximal ca. 550°C, anzulassen. Insbesondere im Bereich von ca. 550°C besitzt ein Härte-Temperaturverlauf einen Knick, wobei unterhalb von ca. 550°C die Härteabnahme je °C deutlich langsamer verläuft als darüber. Es macht somit Sinn, die Ventile nach dem Stauchschmieden nur bis ca. 550 °C, keinesfalls aber wie früher bis 650 °C anzulassen, um dadurch eine deutliche Zunahme der Elastizität und Zähigkeit zu erreichen bei gleichzeitig lediglich geringer Härteabnahme.

Bei einer vorteilhaften Weiterbildung der erfindungsgemäßen Lösung, wird das Ventil lediglich partiell, das heißt räumlich beschränkt ausschließlich in denjenigen Bereichen angelassen, in welchen eine Elastizitätszunahme gewünscht ist. Das Ventil besitzt dabei in bekannter Weise einen Ventilschaft und einen Ventilkopf, wobei der Ventilkopf einen Ventilteller mit einem Ventilsitz aufweist, der über einen Kehlradiusbereich in den Ventilschaft übergeht. Ein Anlassen des Ventils nach dem Stauchschmieden folgt bei dieser Ausführungsform ausschließlich in dessen Schaftbereich und dem sich daran anschließenden Kehlradiusbereich, nicht aber am Ventilteller oder am Ventilsitz, so dass der Ventilteller und der daran angeordnete Ventilsitz seine ursprüngliche vom Stauchschmieden herrührende Härte behalten. Da im Vergleich zum bisherigen Warmfließpressen beim Stauchschmieden der Ventilschaft nicht gehärtet wird, sondern ausschließlich der Ventilkopf, kann bei dem erfindungsgemäßen Herstellungsverfahren das Ventil bei z.B. 550° C angelassen werden, wodurch eine gewisse verschleißschützende Resthärte am Ventilsitz verbleibt und somit eine dort bisher erforderliche zusätzliche Härtung nicht mehr notwendig ist. Durch das lediglich partielle Anlassen des Ventils können lediglich diejenigen Bereiche vergütet werden, in welchen eine Reduzierung der Bruchempfindlichkeit durch eine Erhöhung der Zähigkeit gewünscht ist. Die Verschleißfestigkeit einer Tellerfläche und des Ventilsitzes sowie eines Kerns des Ventilkopfes bleiben durch die dort ursprünglich beibehaltene Härte auch weiterhin erhalten. Nachweisbar an bereits fertig gestellten Ventilen ist das erfindungsgemäße Verfahren beispielweise durch eine Gefügeanalyse, die klarstellt, dass beispielsweise im Kern des Ventilkopfes sowie am Ventilsitz und an der Tellerfläche des Ventiltellers noch martensitisches Gefüge vorhanden ist, während sich dieses im Schaftbereich und dem sich daran anschließenden Kehlradiusbereich verändert durch das partielle Anlassen hat.

Bei einer vorteilhaften Weiterbildung der erfindungsgemäßen Lösung, wird das Ventil in seinem Schaftbereich und in dem sich daran anschließenden Kehlradiusbereich mittels einer Induktionsspule, eines Lasers oder eines Heißgasstroms partiell erhitzt und dadurch angelassen. Insbesondere Induktionsspulen ermögliche ein äußerst exaktes und räumlich begrenztes Erhitzen und damit Anlassen des Ventils, wobei selbstverständlich auch andere Verfahren, wie beispielsweise der Einsatz eines Lasers, denkbar sind. Bereits die Aufzählung der vorgenannten Verfahren lässt erahnen, dass das partielle Vergüten, das heißt das partielle Anlassen des Ventils mittels mehrerer alternativer Verfahren möglich ist.

Zweckmäßig wird das Ventil am Ventilteller und dem Ventilsitz abgeschirmt. Um ein unerwünschtes Anlassen des Ventils am Ventilteller und dem Ventilsitz wirkungsvoll unterbinden zu können, kann vorgesehen sein, dass diese in diesen Bereichen abgeschirmt wird, wodurch das partielle Anlassen räumlich exakt begrenzt und somit auf die gewünschten Bereich beschränkt werden kann. Hierbei kann die Abschirmung zusätzlich gekühlt werden, wodurch das vorhandene martensitische Gefüge noch zuverlässiger vor einem unerwünschten Anlassen geschützt wird.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der in den Ansprüchen definierten vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1a: ein teilweise geschnittenes erfindungsgemäßes Ventil mit einer Bezeichnung der einzelnen Ventilbereiche,
- Fig. 1b: eine Darstellung einer möglichen Anordnung von heizenden Induktionsspulen zum partiellen Anlassen des Ventils,
- Fig. 2: ein Härte-Temperaturdiagramm.

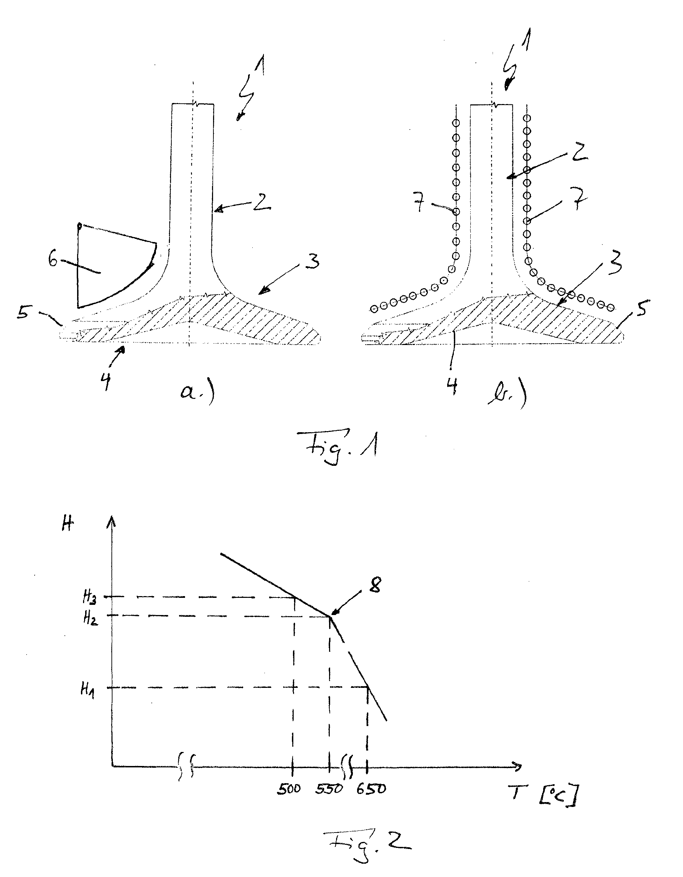

Entsprechend der Fig. 1a, ist ein erfindungsgemäßes Ventil 1 einer im Übrigen nicht gezeigten Brennkraftmaschine dargestellt, welches einen Ventilschaft 2 sowie einen Ventilkopf 3 umfasst. Der Ventilkopf 3 weist dabei einen Ventilteller 4 mit einem Ventilsitz 5 auf, der über einen Kehlradiusbereich 6 in den Ventilschaft 2 übergeht. Erfindungsgemäß wird nun zum Herstellen des Ventils 1 dieses zunächst stauchgeschmiedet, wodurch insbesondere dem Ventilkopf 3 eine hohe Festigkeit und Härte verliehen wird. Anschließend wird das Ventil 1 auf maximal ca. 600 °C, vorzugsweise auf maximal ca. 550 °C angelassen und zwar komplett oder ausschließlich im Bereich seines Ventilschaftes 2 und dem sich daran anschließenden Kehlradiusbereich 6, nicht aber am Ventilteller 4 bzw. am Ventilsitz 5, das heißt lediglich partiell. Dadurch verbleibt die beim Stauchschmieden des Ventilkopfes 3 erlangte Härte insbesondere im Bereich des Ventiltellers 4 und des Ventilsitzes 5 erhalten, wogegen der Kehlradiusbereich 6 und der Ventilschaft 2 angelassen werden und dadurch eine Gefügeumbildung erfahren, wodurch die Bruchzähigkeit und die Elastizität gesteigert werden können. Wichtig ist jedoch, dass die verschleißschützende Härte am Ventilsitz 5 auch während des Anlassens erhalten bleibt, da das Anlassen ausschließlich partiell, das heißt gerade nicht am Ventilsitz 5 erfolgt. Das Anlassen des gesamten Ventils 1 wird dabei bevorzugt bei Großserien und hohen Stückzahlen eingesetzt, wogegen das partielle Anlassen bevorzugt bei Kleinserien eingesetzt wird. Das partielle Anlassen bietet den Vorteil, gezielt Wärme in die anzulassenden Bereiche des Ventils einzutragen und dadurch den Anlassvorgang im Vergleich zum Anlassen des kompletten Ventils zu verkürzen.

Das Anlassen des Ventils 1 im Bereich des Ventilschaftes 2 und den sich daran anschließendem Kehlradiusbereich 6 kann beispielsweise mittels einer Induktionsspule 7 (vgl. Fig. 1 b), eines nicht gezeigten Lasers oder eines ebenfalls nicht gezeigten Heißgasstroms erfolgen. Das Anlassen erfolgt dabei vorzugsweise auf eine Temperatur zwischen 500° und ca. 600° C und nicht wie früher üblich auf bis zu 650° C, wodurch der bei dieser Temperatur auftretende gravierende Härteabfall (vgl. Fig. 2), ab ca. 550 °C, vermieden werden kann. Um das Anlassen tatsächlich auf den Ventilschaft 2 und den Kehlradiusbereich 6 begrenzen zu können, kann das Ventil 1 am Ventilteller 4 und dem Ventilsitz 5 zusätzlich abgeschirmt werden.

Bei einer vorteilhaften Weiterbildung des erfindungsgemäßen Verfahrens, werden ausschließlichen oberflächennahe Bereiche angelassen, so dass ein Kern des Ventiltellers 4, das heißt ein Kern des Ventilkopfes 3, und eine Tellerfläche sowie der Ventilsitz 5 die beim Stauchschmieden erzeugte Härte behalten. Das Anlassen erfolgt dabei vorzugsweise zu einer maximalen von 0,5 mm.

Betrachtet man die Fig. 2, so kann man erkennen, dass bei einem X45-Stahl zwischen ca. 550° und 650° ein deutlicher Härteabfall erfolgt, insbesondere ab einem Knickpunkt 8 bei ca. 550 °C, so dass sich die gemäß dem erfindungsgemäßen Verfahren reduzierte Anlasstemperatur von 500° bis ca. 600 °C positiv auf die bei diesen Temperaturen noch aufrecht zu erhaltende Härte H auswirkt. Dabei sei selbstverständlich angemerkt, dass das Diagramm gemäß der Fig. 2 lediglich annäherungsweise zur Orientierung verwendet werden soll, jedoch keinen Anspruch auf maßstäbliche Darstellung erhebt.

Mit dem erfindungsgemäßen Verfahren ist es möglich, einen bisher erforderlichen zusätzlichen Härtevorgang am Ventilsitz 5 einzusparen, da das Anlassen des Ventils 1 nunmehr ausschließlich partiell und mit geringerer Temperatur erfolgt, wodurch sowohl die im Bereich des Ventilschaftes 2 und dem Kehlradiusbereich 6 geforderte höhere Elastizität bzw. Zähigkeit als auch die am Ventilsitz 5 und am Ventilteller 4 geforderte hohe Härte erreicht werden können. Durch den Wegfall des bisher erforderlichen zusätzlichen Härtevorgang kann eine Kostenreduzierung von zumindest 5% und damit eine deutliche Reduzierung der Herstellkosten erreicht werden.

## Patentansprüche

1. Verfahren zum Herstellen eines, einen Ventilschaft (2) und einen Ventilkopf (3) umfassenden Ventils (1) einer Brennkraftmaschine, wobei der Ventilkopf (3) einen Ventilteller (4) mit einem Ventilsitz (5) aufweist, der über einen Kehlradiusbereich (6) in den Ventilschaft (2) übergeht, bei dem
- das Ventil (1) stauchgeschmiedet wird,
- das Ventil (1) anschließend angelassen wird
**dadurch gekennzeichnet, dass** die Anlasstemperatur maximal ca. 600°C, bevorzugt maximal ca. 550°C ist.

2. Verfahren nach Anspruch 1,
**dadurch gekennzeichnet**,
das Ventil (1) anschließend ausschließlich im Bereich seines Ventilschaftes (2) und dem sich daran anschließenden Kehlradiusbereich (6), nicht aber am Ventilteller (4) oder am Ventilsitz (5), das heißt lediglich partiell angelassen wird.

3. Verfahren nach Anspruch 1 oder 2,
**dadurch gekennzeichnet,**
**dass** das Ventil (1) im Bereich seines Ventilschaftes (2) und dem sich daran anschließenden Kehlradiusbereich (6), mittels einer Induktionsspule (7), eines Lasers oder eines Heißgasstroms erhitzt und dadurch angelassen wird.

4. Verfahren nach einem der Ansprüche 1 bis 3,
**dadurch gekennzeichnet,**
**dass** das Ventil (1) am Ventilteller (4) und/oder dem Ventilsitz (5) abgeschirmt wird.

5. Verfahren nach einem der Ansprüche 1 bis 4,
**dadurch gekennzeichnet,**
**dass** ausschließlich oberflächennahe Bereiche angelassen werden, so dass ein Kern des Ventilkopfes (4) seine beim Stauchschmieden erhaltene Härte behält.

6. Verfahren nach einem der Ansprüche 1 bis 5,
**dadurch gekennzeichnet,**
**dass** der Bereich des Ventilschaftes (2) und der sich daran anschließende Kehlradiusbereich (6) bis in eine Tiefe von ca. 0,5 mm angelassen wird.

7. Ventil (1) einer Brennkraftmaschine mit einem Ventilschaft (2) und einem Ventilkopf (3), wobei
- der Ventilkopf (3) einen Ventilteller (4) mit einem Ventilsitz (5) aufweist, der über einen Kehlradiusbereich (6) in den Ventilschaft (2) übergeht,
- das Ventil (1) stauchgeschmiedet und anschließend angelassen ist,
**dadurch gekennzeichnet, dass** die Anlasstemperatur maximal ca. 600°C, bevorzugt maximal ca. 550°C ist.

8. Ventil nach Anspruch 7,
**dadurch gekennzeichnet,**
**dass** das Ventil (1) ausschließlich im Bereich seines Ventilschaftes (2) und dem sich daran anschließenden Kehlradiusbereich (6), nicht aber am Ventilteller (4) oder am Ventilsitz (5), das heißt lediglich partiell, angelassen ist.

## Claims

1. A method for manufacturing a valve (1) of an internal combustion engine, the valve comprising a valve shaft (2) and a valve head (3), wherein the valve head (3) has a valve disk (4) with a valve seat (5) that transitions via a fillet radius region (6) into the valve shaft (2), wherein
- the valve (1) is upset-forged,
- the valve (1) is subsequently tempered,
**characterized in**
**that** the tempering temperature is at most approx. 600 °C, preferably at most approx. 550 °C.

2. The method according to claim 1,
**characterized in**
**that** the valve (1) is subsequently tempered exclusively in the region of its valve shaft (2) and the adjoining fillet radius region (6), but is not tempered at the valve disk (4) or the valve seat (5), that is, it is only partially tempered.

3. The method according to claim 1 or 2,
**characterized in**
**that** the valve (1) is heated and thereby tempered in the region of its valve shaft (2) and the adjoining fillet radius region (6) by means of an induction coil (7), a laser or a hot gas flow.

4. The method according to any one of claims 1 to 3,
**characterized in**
**that** the valve (1) is shielded at the valve disk (4) and/or the valve seat (5).

5. The method according to any one of claims 1 to 4,
**characterized in**
**that** exclusively near-surface regions are tempered so that a core of the valve head (4) retains its hardness which is obtained during upset forging.

6. The method according to any one of the claims 1 to 5,
**characterized in**
**that** the region of the valve shaft (2) and the adjoining fillet radius region (6) are tempered up to a depth of approx. 0.5 mm.

7. A valve (1) of an internal combustion engine, comprising a valve shaft (2) and a valve head (3), wherein
- the valve head (3) has a valve disk (4) with a valve seat (5) that transitions via a fillet radius region (6) into the valve shaft (2),
- the valve (1) is upset-forged and is subsequently tempered,
**characterized in**
**that** the tempering temperature is at most approx. 600 °C, preferably at most approx. 550 °C.

8. The valve according to claim 7,
**characterized in**
**that** the valve (1) is tempered exclusively in the region of its valve shaft (2) and the adjoining fillet radius region (6), but is not tempered at the valve disk (4) or the valve seat (5), that is, it is only partially tempered.

## Revendications

1. Procédé de fabrication d'une soupape (1) comprenant une tige de soupape (2) et une tête de soupape (3), dans lequel la tête de soupape (3) présente un plateau de soupape (4) avec un siège de soupape (5), qui aboutit par l'intermédiaire d'une plage de rayon de gorge (6) à la tige de soupape (2), dans lequel
- la soupape (1) est forgée par refoulement,
- la soupape (1) est ensuite soumise à un traitement de revenu,
**caractérisé en ce**
**que** la température de revenu maximale est d'environ 600°C, de préférence d'environ 550°C au maximum.

2. Procédé selon la revendication 1,
**caractérisé en ce**
**que** la soupape (1) est ensuite soumise à un traitement de revenu exclusivement au niveau de sa tige de soupape (2) et de la plage de rayon de gorge (6) qui s'y rattache, mais pas sur la plateau de soupape (4) ou sur le siège de soupape (5), c'est-à-dire uniquement partiellement.

3. Procédé selon la revendication 1 ou 2,
**caractérisé en ce**
**que** la soupape (1) est chauffée et ainsi soumise à un traitement de revenu au niveau de sa tige de soupape (2) et de la plage de rayon de gorge (6) qui s'y rattache, au moyen d'une bobine à induction (7), d'un laser ou d'un courant de gaz chaud.

4. Procédé selon une des revendications 1 à 3,
**caractérisé en ce**
**que** la soupape (1) est blindée sur le plateau de soupape (4) et/ou sur le siège de soupape (5).

5. Procédé selon une des revendications 1 à 4,
**caractérisé en ce**
**que** exclusivement les zones proches de la surface sont soumises à un traitement de revendu, de telle sorte qu'un noyau de la tête de soupape (4) conserve sa dureté obtenue lors d'un forgeage par refoulement.

6. Procédé selon une des revendications 1 à 5,
**caractérisé en ce**
**que** la zone de la tige de soupape (2) et la plage de rayon de gorge (6) qui s'y rattache est soumise à un traitement de revenu jusqu'à une profondeur d'environ 0,5 mm.

7. Soupape (1) d'un moteur à combustion interne comportant une tige de soupape (2) et une tête de soupape (3), dans laquelle
- la tête de soupape (3) présente un plateau de soupape (4) avec un siège de soupape (5), qui aboutit par l'intermédiaire d'une plage de rayon de forge (6) à la tige de soupape (2),
- la soupape (1) est forgée par refoulement et ensuite soumise à un traitement de revenu,
**caractérisé en ce**
**que** la température de revenu maximale est d'environ 600°C, de préférence d'environ 550°C au maximum.

8. Soupape selon la revendication 7,
**caractérisée en ce**
**que** la soupape (1) est soumise à un traitement de revenu exclusivement au niveau de sa tige de soupape (2) et de la plage de rayon de gorge (6) qui s'y rattache, mais pas sur la plateau de soupape (4) ou sur la siège de soupape (5), c'est-à-dire uniquement partiellement.
